(19) Europäisches Patentamt

European Patent Office

Office européen des brevets

(11) **EP 1 338 317 A1**

(12) **EUROPEAN PATENT APPLICATION**
published in accordance with Art. 158(3) EPC

(43) Date of publication:
27.08.2003 Bulletin 2003/35

(51) Int Cl.$^7$: **B01D 3/26**

(21) Application number: 01982719.5

(22) Date of filing: 01.11.2001

(86) International application number:
PCT/JP01/09583

(87) International publication number:
WO 02/036231 (10.05.2002 Gazette 2002/19)

(84) Designated Contracting States:
AT BE CH CY DE DK ES FI FR GB GR IE IT LI LU MC NL PT SE TR

(30) Priority: 01.11.2000 JP 2000334831

(71) Applicant: SUMITOMO HEAVY INDUSTRIES, LTD.
Shinagawa-ku, Tokyo 141-8686 (JP)

(72) Inventors:
• MIDORI, Shizuo c/o Kyowa Yuka CO., LTD.
Yokkaichi-shi, Mie 510-8502 (JP)
• OHKUMA, Yurie c/o Kyowa Yuka CO., LTD.
Yokkaichi-shi, Mie 510-8502 (JP)
• TAMURA, Katsunori
Asaka-shi, Saitama 351-0031 (JP)
• HARADA, Yoichi
Nerima-ku, Tokyo 178-0064 (JP)

(74) Representative: Wagner, Karl H., Dipl.-Ing.
WAGNER & GEYER
Patentanwälte
Gewürzmühlstrasse 5
80538 München (DE)

(54) **METHOD OF SIMULATING DISTILLING PLANT**

(57) An object of the present invention is to provide a method for simulating a distillation apparatus having a coupling-type distillation column (10), the method speeding completion of simulation operation. The simulation for the distillation apparatus including a coupling-type distillation column (10) is performed by use of a simulation program for simulating a distillation apparatus including a main column (31) and a side column (32) in combination. The simulation method includes the steps of inputting a liquid distribution ratio of the distillation apparatus (10) as a liquid flow rate distribution ratio of the distillation apparatus at which liquid descending from the top of the main column (31) is divided into liquid descending along a feed side section of the main column (31) and liquid descending along a side-cut side section of the side column (32); calculating a vapor distribution ratio of the distillation apparatus (10), in accordance with the liquid distribution ratio, for dividing vapor ascending from the column bottom into vapor ascending along the feed side section and vapor ascending along the side-cut side section; and performing simulation operation.

FIG. 1

## Description

TECHNICAL FIELD

The present invention relates to a method for simulating a distillation apparatus.

BACKGROUND ART

Conventionally, there has been provided a distillation apparatus composed of a plurality of distillation columns for obtaining products through distillation-effected separation of a plurality of components contained in a material liquid. However, when the distillation columns are constructed separately from one another, the distillation apparatus occupies a large area. In a side-column-type distillation apparatus, in order to adjust pressure within each distillation column, distribution of vapor among the distillation columns must be controlled, with the result that the distillation columns cannot be operated stably.

In order to cope with the above problems, there has been provided a distillation apparatus equipped with a Petryuk-type distillation column. In this distillation apparatus, an inner cylinder is disposed within an outer cylinder, and a material liquid is fed into the inner cylinder so as to undergo distillation.

Manufacture of this distillation apparatus involves supporting the inner cylinder with respect to the outer cylinder, disposing a line in such a manner as to extend through the outer cylinder, and attaching a feed nozzle to the inner cylinder. As a result, the structure of the distillation column becomes complex, and the cost of the distillation apparatus becomes high. Since sufficient sealing cannot be established between the line and the outer cylinder and between the feed nozzle and the inner cylinder, distillation efficiency drops. Since the inner and outer cylinders are disposed concentrically, an exhaust section and an enriching section each assume an annular structure. Thus, the structure of trays to be disposed in the exhaust section and the enriching section becomes complex.

In order to cope with the above problem, there has been provided a distillation apparatus including a coupling-type distillation column whose interior is divided by means of a flat partition. The coupling-type distillation column is equipped with an inlet pipe for feeding a material liquid to a side portion of the column body, and includes a first distillation section, which in turn includes an enriching section formed above the inlet pipe and an exhaust section formed below the inlet pipe; a second distillation section, which in turn includes an enriching section connected to and formed above the upper end of the first distillation section and an exhaust section formed below the upper end and located adjacent to the enriching section of the first distillation section while being separated by the partition; and a third distillation section, which in turn includes an enriching section connected to and formed above the lower end of the first distillation section and located adjacent to the exhaust section of the first distillation section while being separated by the partition, and an exhaust section formed below the lower end. In the above-described distillation apparatus, a material liquid is fed to a side portion of the column body through the inlet pipe, and a distillate, a column-bottom liquid, and a side cut liquid can be obtained at the top, bottom, and side of the coupling-type distillation column body, respectively.

The above-described distillation apparatus including a coupling-type distillation column occupies reduced area, and the distillation column can be operated stably. Thus, the cost of the distillation apparatus can be reduced, and fillers and trays can be readily disposed, thereby enhancing distillation efficiency.

Meanwhile, when a distillation apparatus is manufactured, the apparatus is preferably designed by performing simulation and evaluating the simulation results. However, no simulation program has been provided for distillation apparatuses having a coupling-type distillation column. One possible approach is use of commercially available simulation programs including a general calculation method relating to distillation.

Among such various simulation programs, there has been provided a simulation program for simulating a distillation apparatus including a main column and a side column in combination. This simulation program is prepared through appropriate combination of individual calculation models relating to distillation. According to the program, a variety of data in connection with the main and side columns are input for performing simulation. Through completion of simulation, flow-rate balances among a distillate, a column-bottom liquid, and a side cut liquid obtained at the top of the main column body, the bottom of the main column body, and the side of the side column body, respectively, can be obtained as simulation results.

However, the aforementioned conventional program is developed not for simulating a distillation apparatus including a coupling-type distillation column.

In view of the foregoing, an object of the present invention for solving the aforementioned problem on the conventional simulation program is to provide a method for simulating a distillation apparatus, the method speeding completion of simulation when a distillation apparatus including a coupling-type distillation column is simulated.

DISCLOSURE OF THE INVENTION

Accordingly, the present invention provides a method for simulating a distillation apparatus including a coupling-type distillation column having a column body whose interior is divided by a partition into a first chamber and a second chamber, wherein a material liquid is fed to a side portion of the column body; a distillate is discharged from the top of the column body; a column-bottom liquid is discharged from the bottom of the column body; and a side cut liquid is discharged from a side portion of the column body; the simulation being performed by use of a simulation program for simulating a distillation apparatus including a main column and a side column in combination, wherein the top of the side column is connected to the main column at a first position provided in an upper section of the main column by means of a first liquid flow line and a first vapor flow line; the bottom of the side column is connected to the main column at a second position provided in a lower section of the main column by means of a second liquid flow line and a second vapor flow line; a material liquid is fed to a side portion of the main column; a distillate is discharged from the top of the main column; a column-bottom liquid is discharged from the bottom of the main column; and a side cut liquid is discharged from a side portion of the side column.

The simulation method comprises inputting a liquid distribution ratio of the distillation apparatus at which liquid descending from the top of the coupling-type distillation column is distributed to the first chamber and the second chamber as a liquid flow rate distribution ratio of the distillation apparatus at which liquid descending from the top of the main column is divided into liquid descending along a feed side section of the main column and liquid fed to the side column through the first liquid flow line and descending along a side-cut side section of the side column; calculating, in accordance with the liquid distribution ratio, a vapor distribution ratio of the distillation apparatus at which vapor ascending from the bottom of the coupling-type distillation column is distributed to the first chamber and the second chamber; inputting the calculated vapor distribution ratio as an appropriate vapor flow distribution ratio of the distillation apparatus at which vapor ascending from the bottom of the column is divided into vapor ascending along the feed side section of the main column and vapor fed to the side column through the second vapor flow line and ascending along the side-cut side section of the side column; and performing simulation operation.

According to the simulation method, the liquid distribution ratio and vapor distribution ratio of the coupling-type distillation column are converted to the liquid distribution ratio and vapor distribution ratio of the main column and the side column, thereby speeding completion of simulation operation.

The present invention provides another method for simulating a distillation apparatus including a coupling-type distillation column having a column body whose interior is divided by a partition into a first chamber and a second chamber, wherein a material liquid is fed to a side portion of the column body; a distillate is discharged from the top of the column body; a column-bottom liquid is discharged from the bottom of the column body; and a side cut liquid is discharged from a side portion of the column body; the simulation being performed by use of a simulation program for simulating a distillation apparatus including a main column and a side column in combination, wherein the top of the side column is connected to the main column at a first position provided in an upper section of the main column by means of a first liquid flow line and a first vapor flow line; the bottom of the side column is connected to the main column at a second position provided in a lower section of the main column by means of a second liquid flow line and a second vapor flow line; a material liquid is fed to a side portion of the main column; a distillate is discharged from the top of the main column; a column-bottom liquid is discharged from the bottom of the main column; and a side cut liquid is discharged from a side portion of the side column.

The simulation method comprises inputting a liquid distribution ratio of the distillation apparatus at which liquid descending from the top of the coupling-type distillation column is distributed to the first chamber and the second chamber as a liquid flow rate distribution ratio of the distillation apparatus at which liquid descending from the top of the main column is divided into liquid descending along the feed side section of the main column and liquid fed to the side column through the first liquid flow line and descending along the side-cut side section of the side column; calculating equivalent diameters of the first and second chambers of the coupling-type distillation column, respectively; inputting the calculated equivalent diameters as column diameters of the main column and the side columns, respectively; and performing simulation operation.

According to the simulation method, the liquid distribution ratio of the distillation apparatus and the equivalent diameters of the chambers of the coupling-type distillation column are converted to the liquid flow distribution ratio and equivalent diameters of the main column and the side column, thereby speeding completion of simulation operation.

The present invention provides still another method for simulating a distillation apparatus including a coupling-type distillation column having a column body whose interior is divided by a partition into a first chamber and a second chamber, wherein a material liquid is fed to a side portion of the column body; a distillate is discharged from the top of the column body; a column-bottom liquid is discharged from the bottom of the column body; and a side cut liquid is discharged from a side portion of the column body; the simulation being performed by use of a simulation program for simulating a distillation apparatus including a main column and a side column in combination, wherein the top of the side column is connected to the main column at a first position provided in an upper section of the main column by means of a first liquid flow line and a first vapor flow line; the bottom of the side column is connected to the main column at a second position provided in a lower section of the main column by means of a second liquid flow line and a second vapor flow line; a material liquid is fed to a side portion of the main column; a distillate is discharged from the top of the main column; a column-bottom liquid is discharged from the bottom of the main column; and a side cut liquid is discharged from a side portion of the side column.

The simulation method comprises inputting a liquid distribution ratio of the distillation apparatus at which liquid descending from the top of the coupling-type distillation column is distributed to the first chamber and the second chamber as a liquid flow rate distribution ratio of the distillation apparatus at which liquid descending from the top of the main column is divided into liquid descending along the feed side section of the main column and liquid fed to the side column through the first liquid flow line and descending along the side-cut side section of the side column; calculating, in accordance with the liquid distribution ratio, a vapor distribution ratio of the distillation apparatus at which vapor ascending from the bottom of the coupling-type distillation column is distributed to the first chamber and the second chamber; inputting the calculated vapor distribution ratio as an appropriate vapor flow distribution ratio of the distillation apparatus at which vapor ascending from the bottom of the column is divided into vapor ascending along the feed side section of the main column and vapor fed to the side column through the second vapor flow line and ascending along the side-cut side section of the side column; calculating equivalent diameters of the first and second chambers of the coupling-type distillation column, respectively; inputting the calculated equivalent diameters as column diameters of the main column and the side columns, respectively; and performing simulation operation.

In any one of the methods of the present invention for simulating a distillation apparatus, the method may further comprise calculating a difference between pressure loss arising in the first chamber and that arising in the second chamber of the coupling-type distillation column; inputting the calculated pressure loss difference as a difference between pressure loss arising in the main column and that arising in the side column; inputting a target value of the pressure loss difference; and inputting a flow rate of vapor caused to ascend from the bottom of the coupling-type distillation column and to be fed to the second chamber as a flow rate of vapor fed from the main column to the side column through the second vapor flow line, wherein the vapor flow rate is calculated in the simulation operation such that the pressure loss difference assumes to the target value.

BRIEF DESCRIPTION OF THE DRAWINGS

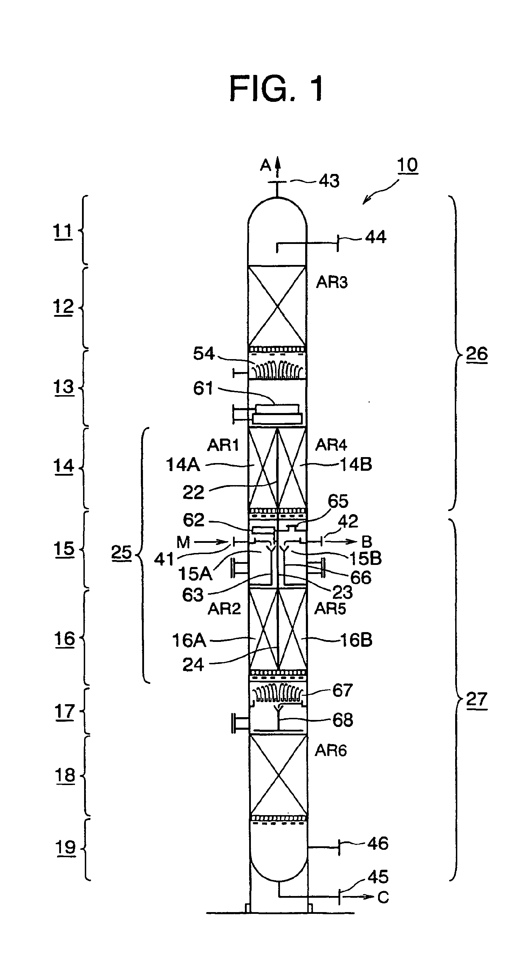

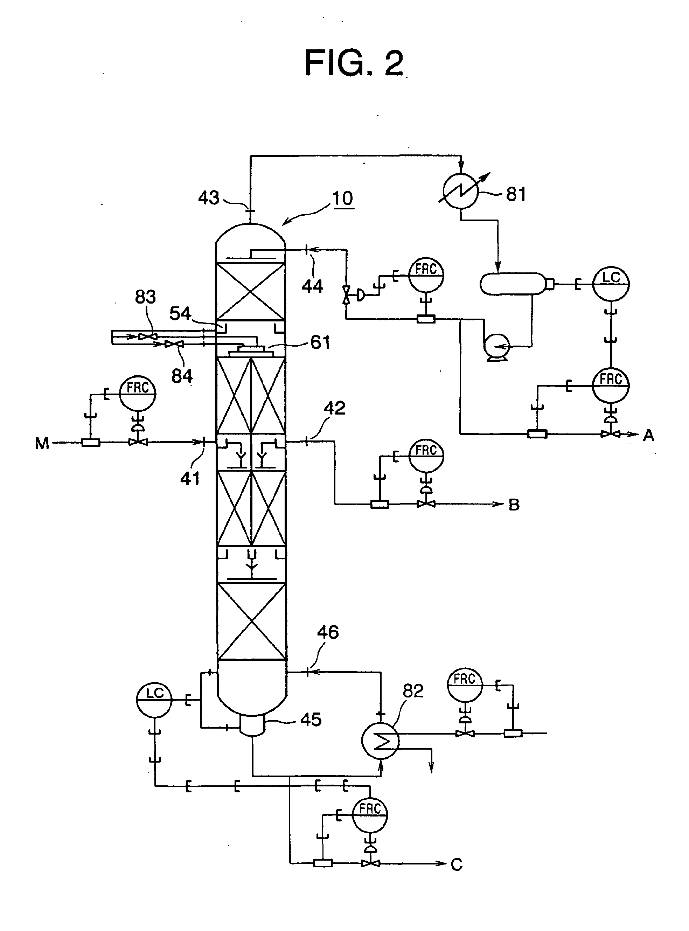

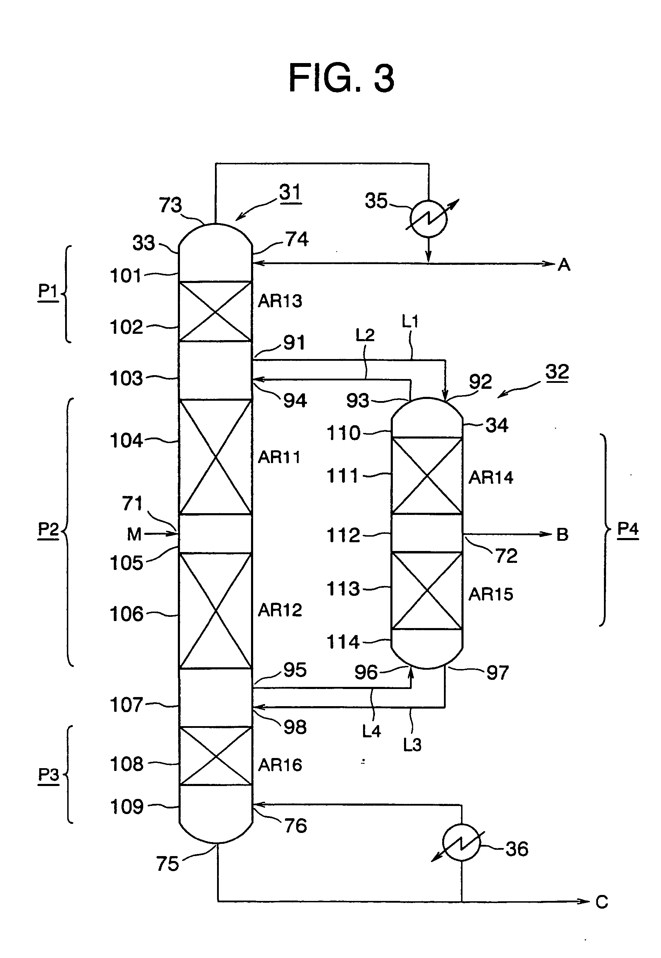

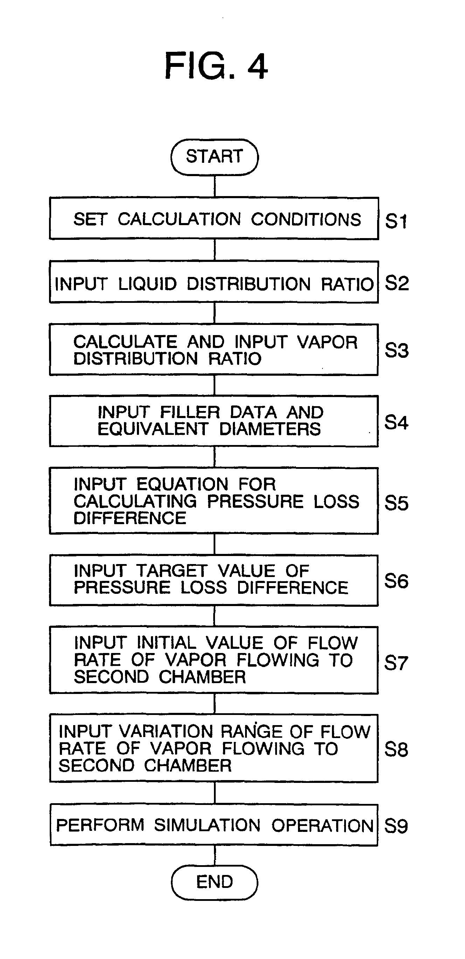

FIG. 1 is a conceptual view of a coupling-type distillation column of a distillation apparatus to be simulated by the simulation method of the present invention; FIG. 2 is a conceptual view of the distillation apparatus to be simulated by the simulation method of the present invention; FIG. 3 is a view of a distillation apparatus for which the simulation program employed in the simulation method according to an embodiment of the present invention is developed; and FIG. 4 is a flowchart showing operation according to the simulation method employed in the embodiment of the present invention.

BEST MODE FOR CARRYING OUT THE INVENTION

The embodiment of the present invention will next be described in detail with reference to the drawings.

FIG. 1 is a conceptual view of a coupling-type distillation column of a distillation apparatus to be simulated by the simulation method of the present invention. FIG. 2 is a conceptual view of the distillation apparatus to be simulated by the simulation method of the present invention.

In the drawings, reference numeral 10 denotes a coupling-type distillation column. The coupling-type distillation column 10 includes a first section 11, a second section 12, a third section 13, a fourth section 14, a fifth section 15, a sixth section 16, a seventh section 17, an eighth section 18, and a ninth section 19, which are disposed in the vertical direction in this order.

In a column body of the coupling-type distillation column 10, a partition 22 divides the fourth section 14 into a first chamber 14A and a second chamber 14B; a partition 23 divides the fifth section 15 into a first chamber 15A and a second chamber 15B; and a partition 24 divides the sixth section 16 into a first chamber 16A and a second chamber 16B. The first chambers 14A-16A are adjacent to the second chambers 14B-16B, respectively. The first chambers 14A-16A constitute a first distillation section 25; the first section 11, the second section 12, the third section 13, and the second chamber 14B constitute a second distillation section 26; and the second chambers 15B and 16B, the seventh section 17, the eighth section 18, and the ninth section 19 constitute a third distillation section 27.

Notably, the partitions 22-24 can be made heat insulating through employment of a design such that the partitions 22-24 are formed of an insulating material or a design such that the interiors of the partitions 22-24 are made vacuum. In this case, since there can be reduced heat transmission between the first chamber 14A and the second chamber 14B, between the first chamber 15A and the second chamber 15B, and between the first chamber 16A and the second chamber 16B, the efficiency of distillation can be enhanced.

The fifth section 15 is disposed substantially at the center of the coupling-type distillation column 10. On the side of the column tower, a feed nozzle 41 is formed at the first chamber 15A, and a side cut nozzle 42 is formed at the second chamber 15B such that each nozzle is communicated with the corresponding chamber. The first section 11 is disposed at the top of the coupling-type distillation column 10. A vapor outlet 43 and a reflux liquid inlet 44, which are connected to a condenser 81, are formed at the first section 11. The ninth section 19 is disposed at the bottom of the coupling-type distillation column 10. A column-bottom liquid outlet 45 and a vapor inlet 46, which are connected to an evaporator 82, are formed at the ninth section 19. The coupling-type distillation column 10, the condenser 81, the evaporator 82, etc. constitute a distillation apparatus.

In the first distillation section 25, the first chamber 14A disposed above the feed nozzle 41 forms an enriching section AR1, and the first chamber 16A disposed below the feed nozzle 41 forms an exhaust section AR2. In the second distillation section 26, the second section 12 connected to and disposed above the upper end of the first distillation section 25 forms an enriching section AR3, and the second chamber 14B forms an exhaust section AR4. In the third distillation section 27, the second chamber 16B forms an enriching section AR5, and the eighth section 18 disposed below the lower end of the first distillation section 25 forms an exhaust section AR6.

As described above, the upper end of the first distillation section 25 is connected to the substantial center of the second distillation section 26, and the lower end of the first distillation section 25 is connected to the substantial center of the third distillation section 27.

In the thus-configured coupling-type distillation column 10, a mixture which predominantly contains components A-C is fed as a material liquid M through the feed nozzle 41. Component A is lower in boiling point than component B, which in turn is lower in boiling point than component C. Components A-C constitute first through third components. The material liquid M fed through the feed nozzle 41 descends in the exhaust section AR2, during which vapor rich in components A and B is generated in an upper portion of the exhaust section AR2, and liquid rich in components B and C is generated in a lower portion of the exhaust section AR2. The liquid rich in components B and C is fed to the third distillation section 27 from the lower end of the first distillation section 25.

The liquid rich in components B and C is heated in the third distillation section 27 to become vapor rich in components B and C. The thus-generated vapor ascends in the exhaust section AR2, during. which the vapor contacts the material liquid M, causing vapor rich in components A and B to evaporate from the material liquid M.

The vapor rich in components A and B ascends in the enriching section AR1 and is then fed to the second distillation section 26 from the upper end of the first distillation section 25, and is condensed into liquid rich in components A and B through cooling in the second distillation section 26. A portion of the liquid rich in components A and B is refluxed to the enriching section AR1 so as to be brought in contact with vapor rich in components A and B ascending in the enriching section AR1. Thus, vapor rich in components A and B can be fed to the second distillation section 26 from the top end of the first distillation section 25.

In the exhaust section AR6, liquid rich in components B and C descends, during which vapor rich in component B is generated in an upper portion thereof, and liquid rich in component C is generated in a lower portion thereof. Accordingly, the liquid rich in component C is discharged as a column-bottom liquid from the column-bottom liquid outlet 45.

A portion of the column-bottom liquid discharged from the column-bottom liquid outlet 45 is sent to the evaporator 82, where the liquid is heated to become vapor rich in component C. The vapor rich in component C is fed to the ninth section 19 from the vapor inlet 46. While the vapor rich in component C ascends in the ninth section 19 and the exhaust section AR6, the vapor rich in component C contacts liquid rich in components B and C, causing vapor rich in component B to be generated from the liquid rich in components B and C.

Then, a portion of the vapor rich in component B ascends in the enriching section AR5, during which the portion of the vapor rich in component B contacts the liquid rich in component B from the second distillation section 26 at the upper end of the third distillation section 27 to thereby become liquid rich in component B. The liquid rich in component B obtained at the upper end of the third distillation section 27 is discharged as a side cut liquid from the side cut nozzle 42.

In the exhaust section AR4 of the second distillation section 26, liquid rich in components A and B descends, during which vapor rich in component A is generated at an upper portion thereof, and liquid rich in component B is generated at a lower portion thereof. The liquid rich in component B obtained at the lower end of the second distillation section 26 is discharged as a side cut liquid from the side cut nozzle 42. Then, the vapor rich in component A ascends in the enriching section AR3 and is then discharged from the vapor outlet 43. The discharged vapor rich in component A is sent to the condenser 81, where the vapor is condensed into liquid rich in component A. The liquid rich in component A is discharged as a distillate.

As described above, vapor rich in components A and B is separated into vapor rich in component A and liquid rich in component B by means of the second distillation section 26. The vapor rich in component A is discharged from the top of the column and condensed into liquid rich in component A. The liquid rich in component A is discharged as a distillate. The liquid rich in component B is discharged as a side cut liquid from the side cut nozzle 42. Liquid rich in components B and C is separated into liquid rich in component B and liquid rich in component C by means of the third distillation section 27. The liquid rich in component B is discharged as a side cut liquid from the side cut nozzle 42. The liquid rich in component C is discharged as a column-bottom liquid from the bottom of the column.

In order to enhance the efficiency of distillation for component A, a portion of the distillate discharged from the condenser 81 is refluxed into the first section 11 from the reflux liquid inlet 44 and brought into contact with vapor rich in component A ascending in the enriching section AR3.

Notably, in the coupling-type distillation column 10, each of the enriching sections AR1, AR3, and AR5 and the exhaust sections AR2, AR4, and AR6 is formed of a filler including a single node. However, depending on relative volatility among components to be obtained through distillation, in order to attain the number of theoretical stages required for distillation, a filler including a plurality of nodes may be formed so as to produce filler properties to be used. Also, a distributor may be disposed between the nodes. Furthermore, the feed nozzle 41 and the side cut nozzle 42 are not necessarily disposed at the same level.

As described above, the material liquid M can be separated into components A-C without use of a plurality of distillation columns. Since there is no need for repeating heating and cooling in a plurality of distillation columns, the number of instruments, such as a condenser, an evaporator, and a pump, can be reduced. Accordingly, an area to be occupied can be reduced, and the amount of consumption of utilities and consumed energy can be reduced as well, thereby reducing the cost of the distillation apparatus.

Preferably, the coupling-type distillation column 10 has a total of about 30-100 theoretical stages, and about 5-30 theoretical stages are allocated to each of the fourth section 14 and the sixth section 16.

Meanwhile, the third section 13 includes a collector 54 and a channel-type distributor 61. Liquid collected by the collector 54 is distributed to the first chamber 14A and the second chamber 14B of the fourth section 14 in predetermined different portions by means of the distributor 61.

The first chamber 15A of the fifth section 15 includes a collector 62 disposed just above the feed nozzle 41 and a tubular distributor 63 disposed just under the feed nozzle 41. Liquid collected by the collector 62, together with the material liquid M fed through the feed nozzle 41, is fed to the first chamber 16A of the sixth section 16 by means of the distributor 63.

Meanwhile, the second chamber 15B includes a chimney-hat-type collector 65 disposed just above the side cut nozzle 42 and a tubular distributor 66 disposed just under the side cut nozzle 42. A portion of liquid collected by the collector 65 is discharged as a side cut liquid from the side cut nozzle 42, and the remaining liquid is fed to the second chamber 16B by means of the distributor 66.

Furthermore, the seventh section 17 includes a collector 67 and a tubular distributor 68. Liquid descending from the sixth section 16 is collected by the collector 67 and is then fed to the eighth section 18 by means of the distributor 68.

In the coupling-type distillation column 10, liquid descending to the third section 13 from the second section 12 is distributed between the first chamber 14A and the second chamber 14B by means of the distributor 61. A distribution ratio is pre-established on the basis of distillation conditions, such as the type of components of the material liquid M, the composition of the components of the material liquid M, the number of theoretical stages of the coupling-type distillation column 10, and the required purity (quality) of a product.

The distributor 61 includes an unillustrated distribution section for distributing liquid in a direction perpendicular to the partition 22 and is adapted to make the amount of liquid fed to an upper portion of the first chamber 14A and the amount of liquid fed to an upper portion of the second chamber 14B differ from each other. Notably, since the aforementioned side cut liquid is discharged from the side cut nozzle 42, the amount of liquid fed to the second chamber 14B becomes greater than that fed to the first chamber 14A.

When, in order to obtain products of two or more kinds, distillation conditions are to be modified in the distillation apparatus, the aforementioned distribution ratio must be changed according to the distillation conditions. To meet this end, a plurality of distribution sections of different distribution ratios are disposed. Liquid descending from the second section 12 is collected by the collector 54 and is then selectively fed to the distributor 61 via a selector valve 83 or 84.

Since liquid can be distributed at the optimum distribution ratio merely through employment of the distribution sections, there is no need for not only disposing many instruments, such as an analyzer, a flow controller, a flow control valve, and a level sensor, for distribution of liquid, but also executing complicated control through operation of the instruments. Accordingly, the size of the distillation apparatus can be reduced, and the cost of the distillation apparatus can be reduced as well.

Meanwhile, when a distillation apparatus is produced, the apparatus is preferably designed by performing simulation and evaluating the simulation results. However, no simulation program has been provided for distillation apparatuses having the coupling-type distillation column 10. Thus, a simulation program for simulating a distillation apparatus including a main column and a side column in combination, is employed, the simulation program being prepared through appropriate combination of individual calculation models relating to distillation.

FIG. 3 is a view of a distillation apparatus for which the simulation program employed in the simulation method according to an embodiment of the present invention is developed.

In the drawing, reference numeral 31 denotes a main column; 32 denotes a side column; 33 denotes a column body of the main column 31; 34 denotes a column body of the side column; 35 denotes a condenser; and 36 denotes an evaporator. The main column 31 includes a first section 101, a second section 102, a third section 103 (first position), a fourth section 104, a fifth section 105, a sixth section 106, a seventh section 107 (second position), an eighth section 108, and a ninth section 109, which are disposed in the vertical direction in this order. The side column 32 includes a tenth section 110, an eleventh section 111, a twelfth section 112, a thirteenth section 113, and a fourteenth section 114, which are disposed in the vertical direction in this order.

At a side portion of the main column 31, a feed nozzle 71 is formed so as to establish communication with the fifth section 105; a liquid outlet 91 and a vapor inlet 94 are formed so as to establish communication with the third section 103; and a vapor outlet 95 and a liquid inlet 98 are formed so as to establish communication with the seventh section 107. At the top of the main column 31, a vapor outlet 73 and a reflux liquid inlet 74 are formed so as to establish communication with the first section 101, while at the bottom of the main column 31, a column-bottom liquid outlet 75 and a vapor inlet 76 are formed so as to establish communication with the ninth section 109. At a side portion of the side column 32, a side cut nozzle 72 is formed so as to establish communication with the twelfth section 112. At the top of the side column 32, a liquid inlet 92 and a vapor outlet 93 are formed so as to establish communication with the tenth section 110. At the bottom of the side column 32, a vapor inlet 96 and a liquid outlet 97 are formed so as to establish communication with the fourteenth section 114.

In the above-described distillation apparatus, the fourth section 104 forms an enriching section AR11; the sixth section 106 forms an exhaust section AR12; the second section 102 forms an enriching section AR13; the eleventh section 111 forms an exhaust section AR14; the thirteenth section 113 forms an enriching section AR15; and the eighth section 108 forms an exhaust section AR16.

Thus, when a material liquid M is fed to the side portion of the main column 31 through the feed nozzle 71, vapor rich in component A is discharged from the vapor outlet 73 and fed to the condenser 35, where liquid rich in component A is formed through condensation. The liquid rich in component A is discharged as a distillate from the condenser 35. A portion of the distillate is fed as a reflux liquid to the reflux liquid inlet 74, and the remaining distillate is fed to an unillustrated distillate reservation zone. Liquid rich in component C is discharged as a column-bottom liquid from the column-bottom liquid outlet 75. A portion of the column-bottom liquid is fed to the evaporator 36, where vapor rich in component C is formed through evaporation. The vapor rich in component C is fed to the ninth section 109 through the vapor inlet 76, and the remaining column-bottom liquid is fed to an unillustrated column-bottom liquid reservation zone. Liquid rich in components A and B is discharged from the liquid outlet 91 and fed to the liquid inlet 92 through a first liquid flow line L1. Vapor rich in component A is discharged from the vapor outlet 93 and fed to the vapor inlet 94 through a first vapor flow line L2. Vapor rich in components B and C is discharged from the vapor outlet 95 and fed to the vapor inlet 96 through a second vapor flow line L4. Liquid rich in component C is discharged from the liquid outlet 97 and fed to the liquid inlet 98 through a second liquid flow line L3. Liquid rich in component B is discharged from the side cut nozzle 72.

The first section 101 and the second section 102 form a packing zone P1; the fourth section 104, the fifth section 105, and the sixth section 106 form a packing zone P2; the eighth section 108 and the ninth section 109 form a packing zone P3; and the eleventh section 111, the twelfth section 112, and the thirteenth section 113 form a packing zone P4.

There will next be described the simulation method for simulating the distillation apparatus including the coupling-type distillation column 10 shown in FIG. 1 by use of a simulation program for simulating the distillation apparatus including the main column 31 and the side column 32 shown in FIG. 3.

FIG. 4 is a flowchart showing operations according to the simulation method employed in an embodiment of the present invention.

The simulation method of the present invention employs a commercially available simulation program generally including a general calculation method relating to distillation. The simulation program is created through appropriate combination of individual calculation models relating to distillation and is adapted to simulate a combination-type distillation apparatus including a main column and a side column in combination.

Firstly, an operator operates an unillustrated operation panel, serving as an input mean, so as to set calculation conditions such as flow rate of material liquid M serving as a material to be fed to the coupling-type distillation column 10 through the feed nozzle 41 (FIG. 1) (i.e., feed flow rate); compositional proportions of components A to C in the material liquid M (i.e., material composition); the compositional proportion of component B in a side cut liquid serving as a product (i.e., product composition); pressures in the main column 31 (FIG. 3) and side column 32 (i.e., operation pressures); and the number of theoretical stages of the coupling-type distillation column 10 (i.e., the number of theoretical column stages).

Next, the operator operates the operation panel so as to input simulation conditions to an input data holder. Specifically, first, the operator inputs liquid distribution ratio η. When the liquid is fed to the column body 33 through the reflux liquid inlet 74 and descends from the top of the column body 33, a portion of the liquid flows along a feed side section (column body 33) at a flow rate Q1, and the remaining portion of the liquid is fed to the side column 32 at a flow rate Q2 through the first liquid flow line L1 and descends along a side-cut side section (column body 34). In the simulation program, the liquid distribution ratio η at which the liquid is distributed to the feed side section and the side-cut side section is represented by

$$\eta = Q1/Q2.$$

Then, the operator inputs, as the above liquid distribution ratio η, a liquid distribution ratio at which liquid is distributed by the distributor 61 in the coupling-type distillation column 10 to the first chamber 14A and the second chamber 14B. The distribution ratio of the flow rate Q1 to that of Q2 is determined such that the total of Q1 and Q2 is adjusted to 10; for example,

$$Q1 : Q2 = 3 : 7,$$

i.e., liquid distribution ratio η is

$$\eta = 0.42857.$$

Notably, distribution ratio of flow rate Q1 to flow rate Q2 and liquid distribution ratio η can be set arbitrarily.

In the simulation program, when the flow rate of vapor ascending from the bottom of the column body 33 along a feed side section (column body 33) is represented by Q3 and the flow rate of vapor fed to the side column 32 through the second vapor flow line L4 and ascending along a side-cut side section (column body 34) is represented by Q4, the vapor distribution ratio ρ at which the vapor is distributed to the feed side section and the side-cut side section is represented by

$$\rho = Q3/Q4.$$

Then, the operator calculates and inputs, in accordance with the liquid distribution ratio η, the vapor distribution ratio ρ at which vapor is distributed in the seventh section 17 of the coupling-type distillation column 10 and fed to the first chamber 16A and the second chamber 16B.

Subsequently, the operator inputs other data regarding the flows of liquid in the feed side section and the side-cut section; such as data representing that the flow of liquid in the feed side section is the flow within the main column 31 and the flow of liquid in the side-cut side section is the flow within the side column 32; data representing the positions (i.e., stages) at which the liquid outlet 91 and the liquid inlet 92 are disposed; and data representing that liquid flows through the feed side section and the side-cut side section.

Subsequently, the operator operates the operation panel so as to input filler data and column diameters of the coupling-type distillation column 10 as filler data and column diameters of the main column 31 and the side column 32. In this case, the enriching section AR1 and the exhaust section AR2 of the coupling-type distillation column 10 correspond to the enriching section AR11 and the exhaust section AR12 of the main column 31, respectively; the enriching section AR3 of the coupling-type distillation column 10 corresponds to the enriching section AR13 of the main column 31; the exhaust section AR4 and the enriching section AR5 of the coupling-type distillation column 10 correspond to the exhaust section AR14 and the enriching section AR15 of the side column 32, respectively; and the exhaust section AR6 of the coupling-type distillation column 10 corresponds to the exhaust section AR16 of the main column 31.

The aforementioned filler data include data designating the main column 31 or the side column 32 as a column for which the filler data are to be input; filling start stage data representing the upper end position of a filler; filling end stage data representing the lower end position of the filler; filler type data representing type of filler; and filler details data representing details of filler. The filler details data include dimensions data representing dimensions of filler and height data representing height of filler. When filler data are unavailable, the operator calculates the filler data in advance by use of a predetermined program.

The column diameters are input as follows. An equivalent diameter of each of the first chambers 14A to 16A and an equivalent diameter of each of the second chambers 14B to 16B of the coupling-type distillation column 10, i.e., equivalent diameters δ1 and δ2 are calculated. Subsequently, the equivalent diameter δ1 is input as the column diameter D1 of the main column 31, and the equivalent diameter δ2 is input as the column diameter D2 of the side column 32. In addition, the thickness of the sheet forming each filler is also input.

Here, the diameter of the body of the coupling-type distillation column 10 is represented by d; cross-section area of each of the first chambers 14A to 16A is represented by S1; and cross-section area of each of the second chambers 14B to 16B is represented by S2. When the cross-section area S1 is equal to the cross-section area S2, the following equations are satisfied.

$$
\begin{aligned}
S1 &= S2 \\
&= (\pi d^2/4)/2 \\
&= \pi \delta1^2/4 \\
&= \pi \delta2^2/4
\end{aligned}
$$

Thus, equivalent diameters δ1 and δ2 satisfy the following equations.

$$\delta 1 = \delta 2$$

$$= d / \sqrt{2}$$

For example, when the diameter d of the body of the coupling-type distillation column 10 is 1.700 [m], the equivalent diameters $\delta1$ and $\delta2$ are 1.202 [m]. Notably, the equivalent diameters $\delta1$ and $\delta2$ are values set for simulation, and a proper diameter d employed in designing the distillation apparatus is obtained through correction.

Meanwhile, in order to equalize pressure loss arising in each of the first chambers 14A to 16A and that arising in each of the second chambers 14B to 16B, the difference between pressure loss arising in each of the first chambers 14A to 16A and that arising in each of the second chambers 14B to 16B; i.e., pressure loss difference, must be calculated.

In order to calculate the difference, the operator operates the operation panel so as to input pressure loss arising in each of the first chambers 14A to 16A as pressure loss (DPM) arising in each of the fourth section 104 to the sixth section 106 in the main column 31 and input pressure loss arising in each of the second chambers 14B to 16B as pressure loss (DPS) arising in each of the eleventh section 111 to the thirteenth section 113 in the side column 32. In addition, the following equation for calculating pressure loss difference (DPP) is also input.

$$DPP = | DPM - DPS | \times 10^{4}$$

Then, the operator operates the operation panel so as to input a target value of pressure loss difference DPP. In this case, the target value is set to 0, with a tolerance of 0.05.

Subsequently, the operator operates the operation panel so as to input data regarding the flows of vapor caused to ascend from the bottom of the coupling-type distillation column 10 and be fed to the second chamber 16B; i.e., initial value of vapor flow rate, as the flow rate of vapor fed from the main column 31 to the side column 32 through the second vapor flow line L4; i.e., initial value of vapor flow rate q.

Subsequently, the operator operates the operation panel so as to input other data regarding the flows of vapor in the feed side section and the side-cut side section; such as data representing that the flow of vapor in the feed side section is the flow within the main column 31 and the flow of vapor in the side-cut side section is the flow within the side column 32; data representing the positions (i.e., stages) at which the vapor outlet 95 and the vapor inlet 96 are disposed; and data representing that vapor flows through the feed side section and the side-cut side section.

The operator operates the operation panel so as to input the upper limit and lower limit of the vapor flow rate as a variation range.

When input of simulation conditions is complete in the above-described manner, an unillustrated control unit starts simulation operation. In the simulation operation, vapor flow rate q is calculated through iterative calculation such that the aforementioned pressure loss difference DPP becomes 0. In addition, flow-rate balances among a distillate obtained from the top of the main column 31, a column-bottom liquid obtained from the bottom of the main column 31, and a side cut liquid obtained from a side potion of the side column 32 can be obtained respectively as simulation results. Notably, an output means such as a display or a printer is provided for outputting the simulation results.

According to the above case, the liquid distribution ratio and equivalent diameters $\delta1$ and $\delta2$ of the coupling-type distillation column 10 are converted to the liquid distribution ratio $\eta$ and column diameters D1 and D2 of the main column 31 and the side column 32, thereby speeding completion of simulation operation.

The simulation flowchart will next be described.

> Step S1: Set calculation conditions
> Step S2: Input liquid distribution ratio $\eta$
> Step S3: Calculate and input vapor distribution ratio $\rho$
> Step S4: Input filler data and equivalent diameters $\delta1$ and $\delta2$
> Step S5: Input equation for calculating pressure loss difference DPP
> Step S6: Input target value of pressure loss difference DPP
> Step S7: Input initial value of flow rate of vapor flowing to second chamber 16B
> Step S8: Input variation of flow rate of vapor flowing tosecond chamber 16B
> Step S9: Perform simulation operation and end processing

The present invention is not limited to the above-described embodiments. Numerous modifications and variations of the present invention are possible in light of the spirit of the present invention, and they are not excluded from the scope of the present invention.

INDUSTRIAL APPLICABILITY

The present invention can be applied to a distillation apparatus including a coupling-type distillation column.

**Claims**

**1.** A method for simulating a distillation apparatus including a coupling-type distillation column having a column body whose interior is divided by a partition into a first chamber and a second chamber, wherein a material liquid is fed to a side portion of the column body; a distillate is discharged from the top of the column body; a column-bottom liquid is discharged from the bottom of the column body; and a side cut liquid is discharged from a side portion of the column body; the simulation being performed by use of a simulation program for simulating a distillation apparatus including a main column and a side column in combination, wherein the top of the side column is connected to the main column at a first position provided in an upper section of the main column by means of a first liquid flow line and a first vapor flow line; the bottom of the side column is connected to the main column at a second position provided in a lower section of the main column by means of a second liquid flow line and a second vapor flow line; a material liquid is fed to a side portion of the main column; a distillate is discharged from the top of the main column; a column-bottom liquid is discharged from the bottom of the main column; and a side cut liquid is discharged from a side portion of the side column,

the simulation method comprising the steps of:

(a) inputting a liquid distribution ratio of the distillation apparatus at which liquid descending from the top of the coupling-type distillation column is distributed to the first chamber and the second chamber as a liquid flow rate distribution ratio of the distillation apparatus at which liquid descending from the top of the main column is divided into liquid descending along a feed side section of the main column and liquid fed to the side column through the first liquid flow line and descending along a side-cut side section of the side column;

(b) calculating, in accordance with the liquid distribution ratio, a vapor distribution ratio of the distillation apparatus at which vapor ascending from the bottom of the coupling-type distillation column is distributed to the first chamber and the second chamber;

(c) inputting the calculated vapor distribution ratio as an appropriate vapor flow distribution ratio of the distillation apparatus at which vapor ascending from the bottom of the column is divided into vapor ascending along the feed side section of the main column and vapor fed to the side column through the second vapor flow line and ascending along the side-cut side section of the side column; and

(d) performing simulation operation.

2. A method for simulating a distillation apparatus including a coupling-type distillation column having a column body whose interior is divided by a partition into a first chamber and a second chamber, wherein a material liquid is fed to a side portion of the column body; a distillate is discharged from the top of the column body; a column-bottom liquid is discharged from the bottom of the column body; and a side cut liquid is discharged from a side portion of the column body; the simulation being performed by use of a simulation program for simulating a distillation apparatus including a main column and a side column in combination, wherein the top of the side column is connected to the main column at a first position provided in an upper section of the main column by means of a first liquid flow line and a first vapor flow line; the bottom of the side column is connected to the main column at a second position provided in a lower section of the main column by means of a second liquid flow line and a second vapor flow line; a material liquid is fed to a side portion of the main column; a distillate is discharged from the top of the main column; a column-bottom liquid is discharged from the bottom of the main column; and a side cut liquid is discharged from a side portion of the side column,

the simulation method comprising the steps of:

(a) inputting a liquid distribution ratio of the distillation apparatus at which liquid descending from the top of the coupling-type distillation column is distributed to the first chamber and the second chamber as a liquid flow rate distribution ratio of the distillation apparatus at which liquid descending from the top of the main column is divided into liquid descending along a feed side section of the main column and liquid fed to the side column through the first liquid flow line and descending along a side-cut side section of the side column;

(b) calculating equivalent diameters of the first and second chambers of the coupling-type distillation column, respectively;

(c) inputting the calculated equivalent diameters as column diameters of the main column and the side columns, respectively; and

(d) performing simulation operation.

3. A method for simulating a distillation apparatus including a coupling-type distillation column having a column body whose interior is divided by a partition into a first chamber and a second chamber, wherein a material liquid is fed to a side portion of the column body; a distillate is discharged from the top of the column body; a column-bottom liquid is discharged from the bottom of the column body; and a side cut liquid is discharged from a side portion of the column body; the simulation being performed by use of a simulation program for simulating a distillation apparatus including a main column and a side column in combination, wherein the top of the side column is connected to the main column at a first position provided in an upper section of the main column by means of a first liquid flow line and a first vapor flow line; the bottom of the side column is connected to the main column at a second position provided in a lower section of the main column by means of a second liquid flow line and a second vapor flow line; a material liquid is fed to a side portion of the main column; a distillate is discharged from the top of the main column; a column-bottom liquid is discharged from the bottom of the main column; and a side cut liquid is discharged from a side portion of the side column,

the simulation method comprising the steps of:

(a) inputting a liquid distribution ratio of the distillation apparatus at which liquid descending from the top of the coupling-type distillation column is distributed to the first chamber and the second chamber as a liquid flow rate distribution ratio of the distillation apparatus at which liquid descending from the top of the main column is divided into liquid descending along the feed side section of the main column and liquid fed to the side column through the first liquid flow line and descending along the side-cut side section of the side column;

(b) calculating, in accordance with the liquid distribution ratio, a vapor distribution ratio of the distillation apparatus at which vapor ascending from the bottom of the coupling-type distillation. column is distributed to the first chamber and the second chamber;

(c) inputting the calculated vapor distribution ratio as an appropriate vapor flow distribution ratio of the distillation apparatus at which vapor ascending from the bottom of the column is divided into vapor ascending along the feed side section of the main column and vapor fed to the side column through the second vapor flow line and ascending along the side-cut side section of the side column;

(d) calculating equivalent diameters of the first and second chambers of the coupling-type distillation column, respectively;

(e) inputting the calculated equivalent diameters as column diameters of the main column and the side columns, respectively; and

(f) performing simulation operation.

4. A method for simulating a distillation apparatus as described in any one of claims 1 to 3, the method further comprising the steps of:

(a) calculating a difference between pressure loss arising in the first chamber and that arising in the second chamber of the coupling-type distillation column;

(b) inputting the calculated pressure loss difference as a difference between pressure loss arising in the main column and that arising in the side column;

(c) inputting a target value of the pressure loss difference; and

(d) inputting a flow rate of vapor caused to ascend from the bottom of the coupling-type distillation column and to be fed to the second chamber as a flow rate of vapor fed from the main column to the side column through the second vapor flow line, wherein

(e) the vapor flow rate is calculated in the simulation operation such that the pressure loss difference assumes the target value.

# FIG. 1

# FIG. 2

# FIG. 3

# FIG. 4

```
        ( START )
            |
  SET CALCULATION CONDITIONS   | S1
            |
  INPUT LIQUID DISTRIBUTION RATIO | S2
            |
  CALCULATE AND INPUT VAPOR
  DISTRIBUTION RATIO           | S3
            |
  INPUT FILLER DATA AND
  EQUIVALENT DIAMETERS         | S4
            |
  INPUT EQUATION FOR
  CALCULATING PRESSURE LOSS    | S5
  DIFFERENCE
            |
  INPUT TARGET VALUE OF
  PRESSURE LOSS DIFFERENCE     | S6
            |
  INPUT INITIAL VALUE OF FLOW
  RATE OF VAPOR FLOWING TO     | S7
  SECOND CHAMBER
            |
  INPUT VARIATION RANGE OF FLOW
  RATE OF VAPOR FLOWING TO     | S8
  SECOND CHAMBER
            |
  PERFORM SIMULATION OPERATION | S9
            |
        ( END )
```

## INTERNATIONAL SEARCH REPORT

| International application No. |
| --- |
| PCT/JP01/09583 |

**A. CLASSIFICATION OF SUBJECT MATTER**
Int.Cl⁷   B01D3/26

According to International Patent Classification (IPC) or to both national classification and IPC

**B. FIELDS SEARCHED**

Minimum documentation searched (classification system followed by classification symbols)
Int.Cl⁷   B01D3/00-3/42

Documentation searched other than minimum documentation to the extent that such documents are included in the fields searched
Jitsuyo Shinan Koho        1926-1996    Jitsuyo Shinan Toroku Koho  1996-2001
Kokai Jitsuyo Shinan Koho  1971-2001    Toroku Jitsuyo Shinan Koho  1994-2001

Electronic data base consulted during the international search (name of data base and, where practicable, search terms used)
WPI(DIALOG)

**C. DOCUMENTS CONSIDERED TO BE RELEVANT**

| Category* | Citation of document, with indication, where appropriate, of the relevant passages | Relevant to claim No. |
| --- | --- | --- |
| Y | WO 99/56848 A1 (Sumitomo Heavy Industries, Ltd.), 11 November, 1999 (11.11.1999), Full text, especially, page 23, line 26 to page 26, line 11; Fig. 1 & JP 11-314002 A    & EP 1084741 A1 & CN 1299296 A        & KR 2001043354 A | 1-4 |
| Y | US 4994152 A (BASF Aktiengesellschcaft), 19 February, 1991 (19.02.1991), Full text; drawings & JP 2-233105 A      & EP 380001 A1 & DE 59005224 G      & SU 1829948 A3 & ES 2062115 T3      & CZ 9000304 A3 & SK 9000304 A3 | 1-4 |
| Y | JP 10-57703 A (Kyowa Yuka K.K.), 03 March, 1998 (03.03.1998), Par. Nos. [0072] to [0081]; Figs. 1, 2   (Family: none) | 1-4 |

☒  Further documents are listed in the continuation of Box C.      ☐  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 24 January, 2002 (24.01.02) | 05 February, 2002 (05.02.02) |

| Name and mailing address of the ISA/ | Authorized officer |
| --- | --- |
| Japanese Patent Office | |
| Facsimile No. | Telephone No. |

Form PCT/ISA/210 (second sheet) (July 1992)

**INTERNATIONAL SEARCH REPORT**

| International application No. |
| --- |
| PCT/JP01/09583 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 10-57704 A (Kyowa Yuka K.K.),<br>03 March, 1998 (03.03.1998),<br>Par. Nos. [0072] to [0082]; Figs. 1, 2   (Family: none) | 1-4 |

Form PCT/ISA/210 (continuation of second sheet) (July 1992)